# EUROPEAN PATENT APPLICATION

(11) **EP 2 808 922 A1**
(43) Date of publication of application: **03.12.2014**
(21) Application number: 14170320.7
(22) Date of filing: 28.05.2014
(51) Int. Cl.: H01M 2/10, H01M 10/613, H01M 10/647, H01M 10/6556

(54) **Battery module**

(30) Priority: 29.05.2013 KR 20130061186
(71) Applicant: Samsung SDI Co., Ltd., Yongin-si, Gyeonggi-do (KR)
(72) Inventor: Lim, Young-Bin, Gyeonggi-do (KR)
(74) Representative: Walaski, Jan Filip

(57) **Abstract**

A battery module includes a plurality of battery cells aligned in one direction, a fixing member configured to fix the plurality of battery cells, a heat exchange member adjacent to bottom surfaces of the plurality of battery cells, and at least one elastic member under the heat exchange member, the at least one elastic member being on a support portion, and the fixing member being fastened to the support portion.

## Description

The present invention relates to a battery module, and more particularly, to a battery module having improved heat exchange efficiency.

A high-power battery module using a non-aqueous electrolyte with high energy density has recently been developed. The high-power battery module is configured as a large-capacity battery module manufactured by connecting a plurality of battery cells in series so as to be used in driving motors of devices requiring high power, e.g., electric vehicles and the like. Further, a battery pack can be configured by electrically connecting such a plurality of battery modules to one another.

Generally, a battery module may be configured with a plurality of battery cells, and each battery cell may transmit energy to an external electronic device through an electrochemical reaction. In this case, the battery cell generates heat during the electrochemical reaction.

Embodiments provide a battery module having improved heat exchange efficiency.

Embodiments also provide a battery module capable of improving the productivity thereof by applying a new member.

According to an aspect of the example embodiments, there is provided a battery module including a plurality of battery cells aligned in one direction, a fixing member configured to fix the plurality of battery cells, a heat exchange member adjacent to bottom surfaces of the plurality of battery cells, and at least one elastic member under the heat exchange member, the at least one elastic member being on a support portion, and the fixing member being fastened to the support portion.

A fastening portion may be provided to the fixing member, and a second fastening portion fastened to the first fastening portion may be provided in the support portion supporting the battery module.

The fixing member may include a pair of end plates provided at the outside of the battery cells so as to face wide surfaces of the battery cells, and a connection plate configured to connect the pair of end plates to each other. The first fastening portion may be provided to each of the pair of end plates.

The first fastening portion may be bent in a direction opposite to that of the battery cells at a lower end of each of the pair of end plates.

The support portion may include one surface of a housing that accommodates the plurality of battery cells therein.

The support portion may include a separate frame provided between the one surface of the housing and the elastic member.

The second fastening portion fastened to the first fastening portion may be provided in the frame.

An accommodating portion having the heat exchange member provided therein may be formed inside the frame.

The accommodating portion of the frame may include a groove provided to correspond to the shape of the heat exchange member.

The battery module may be provided in the accommodating portion. The first fastening portion may be provided to overlap with the second fastening portion provided at an edge of the accommodating portion.

The elastic member may be interposed between the support portion and the heat exchange member.

The heat exchange member may include a cooling plate provided to have a size corresponding to that of the bottom surface of the plurality of battery cells.

The elastic member may be provided to correspond to the bottom surface of the plurality of battery cells.

The elastic member may be made of any one or more of rubber and sponge.

The elastic member may have a surface formed in an embossing pattern.

Features will become apparent to those of ordinary skill in the art by describing in detail exemplary embodiments with reference to the attached drawings in which:
FIG. 1 illustrates a perspective view of a battery module according to an embodiment.
FIG. 2 illustrates an exploded perspective view of the battery module in FIG. 1.
FIG. 3 illustrates a sectional view taken along line A-A of FIG. 1.
FIG. 4A illustrates a perspective view of a heat exchange member in a battery module according to another embodiment.
FIG. 4B illustrates a sectional view taken along line B-B in FIG. 4A.
FIG. 5 illustrates a perspective view of a battery module according to still another embodiment.
FIG. 6 illustrates an exploded perspective view of the battery module in FIG. 5.
FIG. 7 illustrates a sectional view taken along line C-C in FIG. 5.

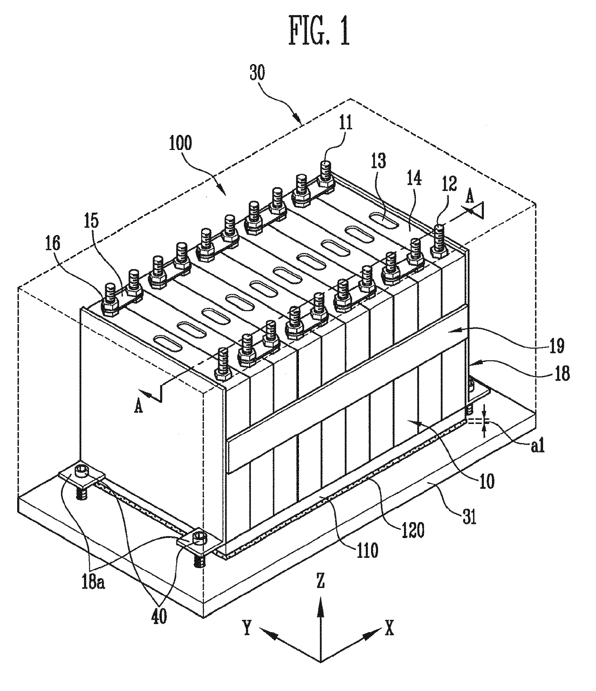

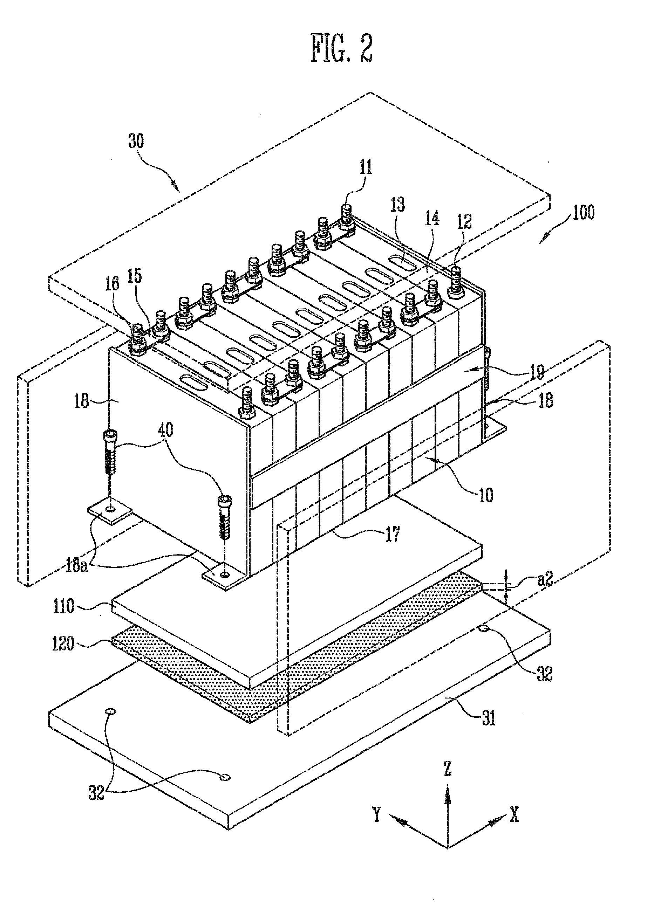

Referring to FIGS. 1 and 2, the battery module 100 according to this embodiment may include a plurality of battery cells 10 aligned in one direction, fixing members 18 and 19 configured to fix the plurality of battery cells 10, i.e. to hold them together, a heat exchange member 110 provided adjacent to a bottom surface 17 of the plurality of battery cells 10, and one or more elastic members 120, for example an elastic sheet, provided beneath the heat exchange member 110. The elastic member 120 may be provided on a support portion 31. In this case, the fixing member 18 may be fastened to the support portion 31. A first fastening portion 18a may be provided to the fixing member 18, and a second fastening portion 32 fastened to the first fastening portion 18a may be provided to the support portion (eg. support plate) 31 supporting the battery module 100. For example, the first fastening portion is a lug 18a extending from a fixing plate 18, the lug having a through hole for receiving a screw or bolt 40 that screws into a corresponding hole 32 in the support plate 31.

Each battery cell 10 is, for example, a prismatic cell, the wide flat surfaces of the cells being stacked together to form the battery module.

Each battery cell 10 may include a battery case, and an electrode assembly and an electrolyte, which are accommodated in the battery case. The electrode assembly and the electrolyte generate electrochemical energy through a reaction therebetween, and the battery case is hermetically sealed by a cap assembly 14. The cap assembly 14 may be provided with positive and negative electrode terminals 11 and 12 having different polarities, and a vent 13. The vent 13 is a safety means of the battery cell 10, which acts as a passage through which gas generated in the battery cell 10 is exhausted to the outside of the battery cell 10. The positive and negative electrode terminals 11 and 12 of neighbouring battery cells 10 are electrically connected through a bus-bar 15, and the bus-bar 15 may be fixed by a nut 16 or the like.

The battery module 100 may be used as one power source by binding the plurality of battery cells 10 as one bundle, using the fixing members 18 and 19. In this case, the fixing members 18 and 19 may include a pair of end plates 18 provided to face wide surfaces of the battery cells 10 at the outside of the battery cells 10, and a connection plate 19 configured to connect the pair of end plates 18 to each other.

Generally, a battery module includes a plurality of battery cells, and the battery cells generate a large amount of heat while being charged/discharged. The generated heat is accumulated in the battery cells, thereby accelerating the degradation of the battery cells. For example, the accumulated heat may reduce stability, e.g., cause an explosion. In particular, in a conventional battery module with high power, a cooling device may be provided to reduce accumulated heat. However, it may be difficult to control a plurality of battery cells without any difference in temperature between the battery cells, and therefore, the reliability of the conventional battery module may be lowered.

In the battery module according to example embodiments, all the battery cells may be equally cooled down without any difference in temperature between the battery cells in the battery module, using a new structure. Further, no additional processes are added in the manufacturing of the battery module with the new structure applied to the battery module, thereby improving the productivity of the battery module. When the battery module is mounted, an assembling tolerance for the battery module is provided, thereby reducing a failure rate in the manufacturing of the battery module.

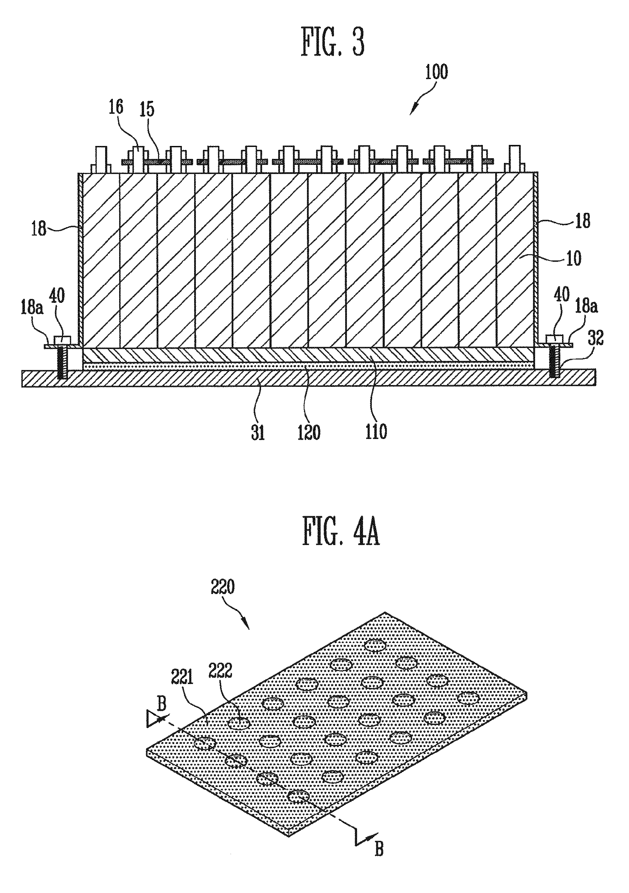

FIG. 3 illustrates a sectional view taken along line A-A of FIG. 1. Referring to FIG. 3, the pair of end plates 18 are provided opposite to each other, and the plurality of battery cells 10 are aligned in one direction between the end plates 18 so that wide surfaces of neighbouring battery cells 10 are opposite to each other. The pair of end plates 18 press the battery cells 10 toward the inside of the battery cells 10, and the connection plate 19 fixes side surfaces of the battery cells 10 while connecting the pair of end plates 18 to each other (FIGS. 1-2). The first fastening portion 18a may be provided to each end plate 18. The fastening portion 18a may be bent away from, i.e., in a direction opposite to that of, the battery cells 10 at a lower end of each end plate 18. For example, each end plate 18 may be arranged with a corresponding fastening portion 18a in a L-shape, so the fastening portion 18a may extend in parallel to the surface of the support plate 31. Accordingly, when the fastening portions 18a on both sides of the battery module 100 are fastened to the support plate 31 by bolts 40, the entire battery module 100 may be pulled closer to the surface of the support plate 31. In this case, it is sufficient that the first fastening portion 18a is fastened to the support plate while overlapping with the support plate. Therefore, the first fastening portion 18a may be any portion of the fixing members 18 and 19, but the example embodiments are not limited thereto.

In the battery module 100 according to this embodiment, the support portion is a portion on which the battery module 100 is mounted. For example, as illustrated in FIGS. 1-2, the support portion may include a plate comprising one part 31 of a housing 30. The first fastening portion 18a may be provided to overlap with the support plate 31 of the housing 30, and the second fastening portion 32 may be provided at a position corresponding to that of the first fastening portion 18a in the support plate 31. The first and second fastening portions 18a and 32 are fastened to each other by a separate fastening member 40, so as to fix the battery module 100. For example, the fastening member 40 may include a bolt, stud or the like.

The battery module 100 further includes the heat exchange member 110 and the elastic member 120, which are provided adjacent to the bottom surface 17 of the battery cells 10 so as to cool down the battery cells 10. The elastic member 120 may be interposed between the support plate 31 and the heat exchange member 110.

The heat exchange member 110 may include a cooling plate provided to have a size corresponding to that of the bottom surface 17 of the plurality of battery cells 10, e.g., the cooling plate may completely overlap (ie. be coextensive with) the entire bottom surfaces of all the battery cells 10 in the battery module 100. That is, the cooling plate may include a passage through which a cooled heat exchange medium can move. The heat exchange medium performs a heat exchange with the battery cells 10 while circulating inside the heat exchange member 110, i.e., inside the cooling plate.

The elastic member 120 may be provided to correspond to the bottom surface 17 of the plurality of battery cells 10, e.g., the elastic member 120 may completely overlap the entire bottom surface 17. For example, the elastic member 120 has a constant pressure load, and may be made of rubber and/or sponge and/or other elastic materials. That is, the elastic member 120 may be pressed to a predetermined thickness by the weight of the plurality of battery cells 10. In this case, the thickness a2(see FIG. 2) of the elastic member 120 before being pressed by the battery cells 10 is thicker than the thickness a1(see FIG. 1) of the elastic member 120 after being pressed by the battery cells 10.

That is, the elastic member 120 having a predetermined pressure load is provided on the support plate 31 of the housing 30, and the heat exchange member 110 is then positioned on the elastic member 120, e.g., the elastic member 120 may be positioned directly between the support plate 31 and the heat exchange member 110. Subsequently, the plurality of battery cells 10 are mounted on the heat exchange member 110, and the first fastening portion 18a of each end plate 18 is fastened to the second fastening portion 32 in the support plate 31 of the housing 30. In this case, the first and second fastening portions 18a and 32 are fastened to each other so that the battery cells 10 compress the elastic member 120. Thus, the heat exchange member 110 and the battery cells 10 are tightly pressed against each other, by the restoring force of the elastic member 120, thereby improving the heat exchange efficiency of the battery cells 10. Further, the elastic member 120 may provide an assembling tolerance when the battery cells 10 are fixed on the one surface 31 of the housing 30, thereby improving the productivity of the battery module 100.

Hereinafter, other embodiments will be described with reference to FIGS. 4A to 7. Contents of these embodiments, except the following contents, are similar to those of the embodiment described with reference to FIGS. 1 to 3, and therefore, their detailed descriptions will be omitted.

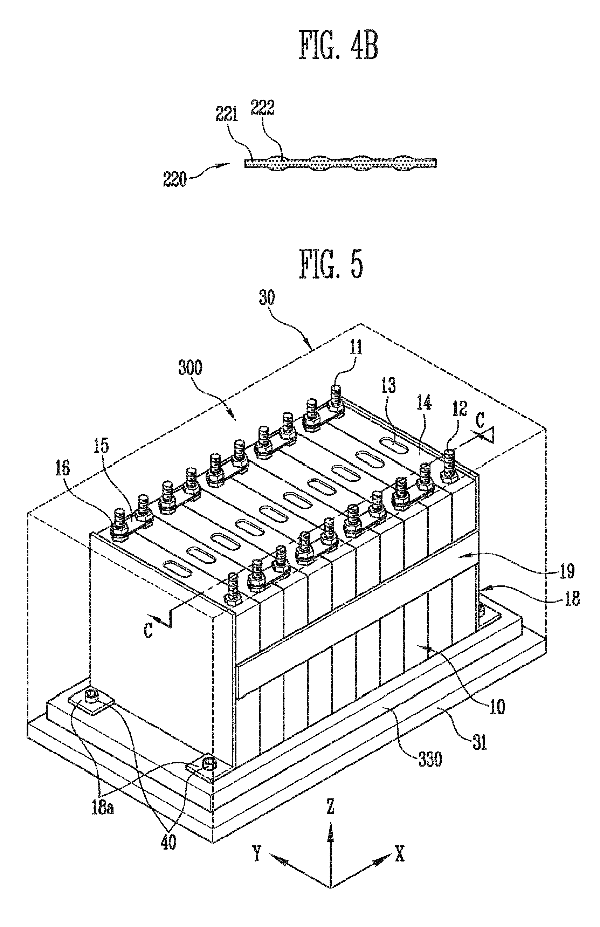

FIG. 4A illustrates a perspective view of a heat exchange member in a battery module according to another embodiment. FIG. 4B illustrates a sectional view taken along line B-B of the heat exchange member in FIG. 4A.

Referring to FIGS. 4A and 4B, a battery module according to an embodiment may have an elastic member 220 provided beneath the heat exchange member. The elastic member 220 may be pressed to a predetermined thickness with respect to the pressure applied by the battery cells 10. For example, a surface 221 of the elastic member 220 may be formed in an embossed pattern. That is, a plurality of protruding portions 222 may be provided on the surface 221 of the elastic member 220. In this case, the protruding portions 222 may be provided on one surface or both surfaces 221 of the elastic member 220. The plurality of protruding portions 222 may be formed in an embossed pattern, so that the battery cells 10 can effectively press the elastic member 220. Further, the shape of the protruding portions 222 may be appropriately changed, according to the shape of a bottom surface of the battery cells 10, so that it is possible to easily cope with a change in design of the battery module.

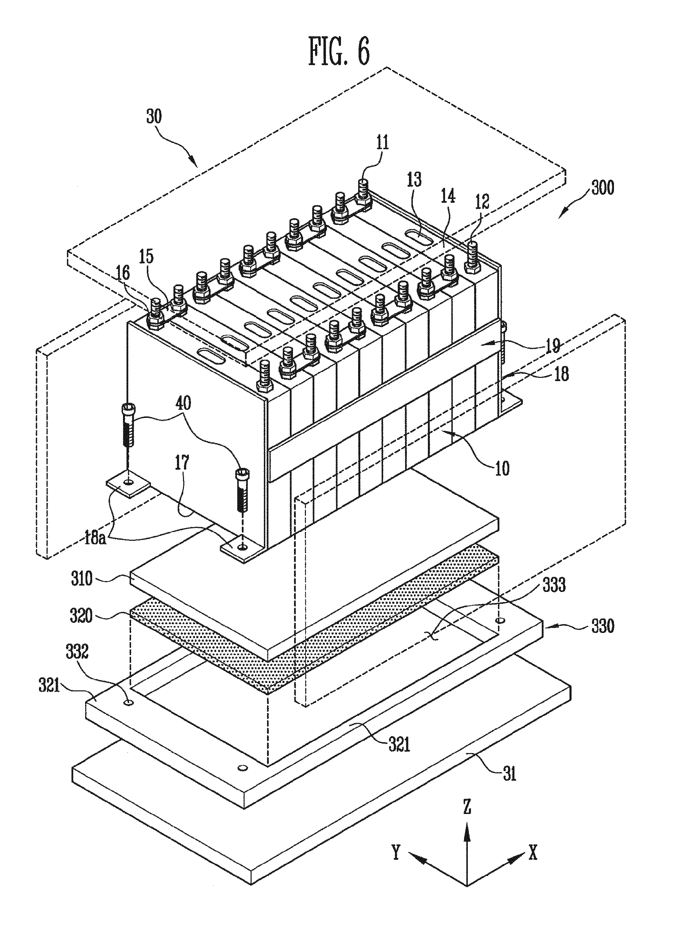

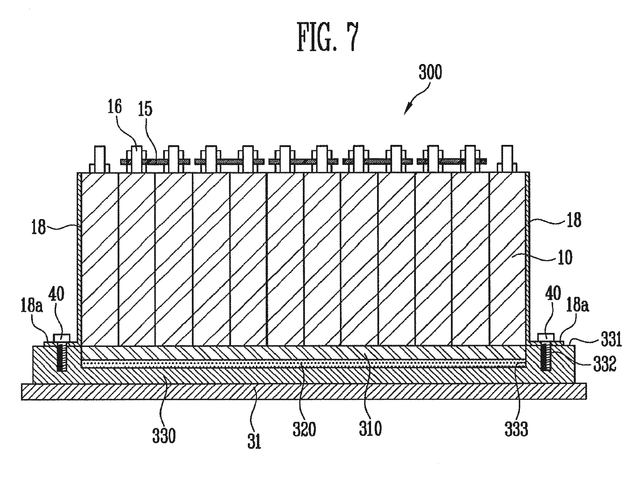

FIG. 5 illustrates a perspective view of a battery module according to still another embodiment. FIG. 6 illustrates an exploded perspective view of the battery module of FIG. 5. FIG. 7 illustrates a sectional view taken along line C-C in FIG. 5.

Referring to FIGS. 5 to 7, a battery module 300 according to this embodiment may include the plurality of battery cells 10 aligned in one direction, and the pair of end plates 18 and the connection plate 19, configured to fix the plurality of battery cells 10, and a heat exchange member 310 configured to perform a heat exchange with the battery cells 10 while coming in contact with the bottom surface 17 of the battery cells 10. The first fastening portion 18a may be provided to each end plate 18, and a second fastening portion 332 fastened to the first fastening portion 18a may be provided to a support portion. An elastic member 320 may be provided beneath the heat exchange member 310.

In the battery module 300 according to this embodiment, the support portion may include a separate frame 330 provided between the support plate 31 and the elastic member 320. The elastic member 320 is provided on the frame 330, and the first fastening portion 18a of each end plate 18 may be fastened to the second fastening portion 332 provided in the frame 330. That is, the battery module 300 is accommodated in the housing 30, so as to be supported by the separate frame 330 provided on the support portion 31 of the housing 30.

An accommodating portion 333 having the heat exchange member 310 provided therein may be formed inside the frame 330. In this case, the accommodating portion 333 of the frame 330 includes a recess provided to correspond to the shape of the heat exchange member 310. The second fastening portion 322 fastened to the first fastening portion 18a may be provided in the frame 330. For example, the battery module is provided in the accommodating portion 333. In this case, the first fastening portion 18a may be provided to overlap with the second fastening portion 332 provided at an edge of the accommodating portion 333.

The elastic member 320 is provided in the accommodating portion 333, and the heat exchange member 310 and the battery cells 10 are sequentially provided on the elastic member 320, so that the elastic member 320 can receive a constant pressure load applied by the battery cells 10. The frame 330 is used as the support portion supporting the plurality of battery cells 10, so that it is possible to facilitate the movement of the battery module 300. Thus, the examination of the battery module 300 can be performed without separating the battery module 300 from the housing 30, so that the battery module 300 can be efficiently used for a long period of time.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the invention as set forth in the following claims.

## Claims

1. A battery module, comprising:
a plurality of battery cells (10);
a fixing member (18, 19) configured to hold the plurality of battery cells together;
a heat exchange member (110, 310) adjacent to bottom surfaces (17) of the plurality of battery cells; and
at least one elastic member (120, 220, 320) under the heat exchange member, the at least one elastic member being on a support portion (31, 330), and the fixing member (18) being fastened to the support portion (31, 330).

2. The battery module as claimed in claim 1, wherein the fixing member includes a first fastening portion (18a), the first fastening portion being fastened to a second fastening portion (32, 332) in the support portion.

3. The battery module as claimed in claim 2, wherein the fixing member further comprises:
a pair of end plates (18) outside the battery cells, the pair of end plates defining two outermost edges of the battery module and facing wide surfaces of the battery cells; and
a connection plate (19) configured to connect the pair of end plates to each other, a first fastening portion being formed at each of the pair of end plates.

4. The battery module as claimed in claim 2 or 3, wherein the first fastening portion comprises a lug at a lower end of each of the pair of end plates.

5. The battery module as claimed in claim 2, 3 or 4, wherein the support portion includes one side of a housing, the housing being configured to accommodate the plurality of battery cells therein.

6. The battery module as claimed in claim 5, wherein the support portion includes a separate frame (330) between the side of the housing and the elastic member.

7. The battery module as claimed in claim 6, wherein the second fastening portion (332) is in the frame.

8. The battery module as claimed in claim 6 or 7, further comprising an accommodating portion (333) inside the frame, the heat exchange member (310) being positioned in the accommodating portion.

9. The battery module as claimed in claim 8, wherein the accommodating portion of the frame comprises a recess corresponding to the shape of the heat exchange member.

10. The battery module as claimed in claim 8 or 9, wherein the first fastening portion overlaps the second fastening portion, the second fastening portion being at an edge of the accommodating portion.

11. The battery module as claimed in any one of the preceding claims, wherein the heat exchange member includes a cooling plate that is coextensive with the area of the bottom surfaces of the plurality of battery cells.

12. The battery module as claimed in any one of the preceding claims, wherein the elastic member comprises an elastic sheet that is coextensive with the area of the bottom surfaces of the plurality of battery cells.

13. The battery module as claimed in any one of the preceding claims, wherein the elastic member includes at least one of rubber and sponge.

14. The battery module as claimed in any one of the preceding claims, wherein the elastic member has an embossed surface.

15. The battery module according to claim 14, wherein the embossed surface comprises a plurality of protrusions that are arranged to press the bottom surfaces of corresponding ones of the battery cells.
